# EUROPEAN PATENT APPLICATION

(11) **EP 1 848 121 A1**
(43) Date of publication of application: **24.10.2007**
(21) Application number: 05709492.2
(22) Date of filing: 31.01.2005
(51) Int. Cl.: H04B 7/26

(54) **WIRELESS COMMUNICATION SYSTEM, AND BASE STATION AND TERMINALS USED IN THAT SYSTEM**

(71) Applicant: FUJITSU LIMITED, Kawasaki-shi, Kanagawa 211-8588 (JP)
(72) Inventor: KAWABATA, Kazuo, c/o FUJITSU LIMITED, Kawasaki-shi, Kanagawa 2118588 (JP); FURUKAWA, Hideto, c/o FUJITSU LIMITED, Kawasaki-shi, Kanagawa 2118588 (JP); OBUCHI, Kazuhisa, c/o FUJITSU LIMITED, Kawasaki-shi, Kanagawa 2118588 (JP); TAJIMA, Yoshiharu, c/o FUJITSU LIMITED, Kawasaki-shi, Kanagawa 2118588 (JP)
(74) Representative: Wilding, Frances Ward
(86) International application number: PCT/JP2005/001329
(87) International publication number: WO 2006/082616

(57) **Abstract**

The radio communication system, comprises: a base station; and a plurality of terminals which perform reservation request for radio resources necessary for data transmission to said base station at random, wherein each of the plurality of terminals are allocated with individualized radio resources for reservation request necessary for the terminal to perform the reservation request to the base station. As a result, the occurrence of collision of reservation requests is eliminated.

## Description

### TECHNICAL FIELD

The present invention relates to a communication system, and a base station and a terminal for use in the system. The invention particularly relates to packet communication, in particular, packet communication by radio from the terminal to the base station (uplink).

### BACKGROUND ART

When communication is performed from a mobile terminal (MS: Mobile Station) to a base station (BS) (uplink) in a communication system, there are two methods. In one method, radio resources occupied by each mobile station (hereinafter will be simply called the "terminal") is determined (communication by means of individual (dedicated) channels), and in another method, all the terminals share the same radio resources (communication by means of common channel).

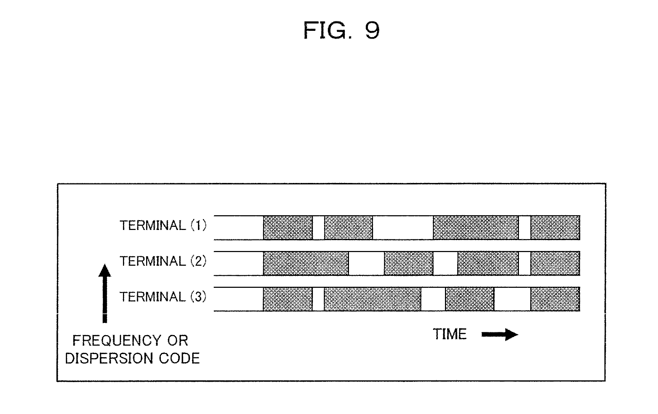

When communication is performed using individual channels, each terminal has its occupied resources, and thus each terminal is not effected by other terminals.
However, in a case where the data amount to be transmitted is low, radio resources occupied and kept are not exploited by 100%. As shown in FIG. 9, for example, when individual channels are allocated to three terminals (1), (2), and (3), respectively, the data amount to be transmitted is so low that transmission packet becomes spares, and parts other than the meshed parts are not used, resulting in inefficient use of radio resources. In this instance, radio resources forming individual channels are, for example, frequency and spreading codes used in the CDMA (Code Division Multiple Access) scheme.

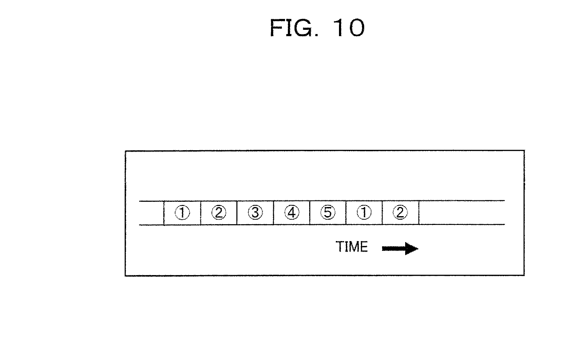

On the other hand, when a common channel is used, radio resources can be used by 100% even if transmission data amount from each terminal is low. For example, as shown in FIG. 10, radio frames obtained by dividing a radio frame into five parts (see circled number 1 through 5) in the time direction by five terminals are sequentially used, resulting in 100% use of radio resources.
However, generally speaking, access to common resources (common channel) occurs at random accompanied with data generation (generally, at random) to be transmitted from each terminal. Such access method is called the "random access method", and the pure ALOHA scheme and the Slotted ALOHA scheme are well known. For example, its description is made on page 374 of the following non-patent document 1. In such a "random access method", communication efficacy is deteriorated by occurrence of collision with respect to a common channel.

Further, a scheme is well known in which communication is performed, dividing a region (reservation region) which performs transmission reservation from terminals and a region (communication region) which actually performs communication. This is called the "reservation random access scheme". The "reservation random access scheme" is described in the following non-patent document 1, on page 377, as "random reservation scheme".
Here, as technology relating to the "reservation-type random access scheme", there is a technique proposed by the following patent document 2. In this technique, different reservation regions are prepared according to service quality, so that effects from another service class is avoided.

Further, as relative technology, there is a technique proposed in the following patent document 1. In this technique, transmission possibility probability of reservation packets is controlled according to communication traffic. Lowering of throughput due to reservation packet collision is avoided in such a manner.
Furthermore, as relative technology, there is a technique proposed by the following patent document 3. In this technique, one or more packet reservation channel is kept according to the traffic amount of a packet. In this manner the probability of collision of packet reservation messages from multiple mobile stations is suppressed.

In addition, as relative technology, there is a technique proposed in the patent document 4. In this technique, multiple virtual frames whose leading slots are shifted by the same length as that of a reference frame having multiple slots. To a terminal which requests a transmission reservation, any of the virtual frames is assigned, and the transmission reservation is allocated within the virtual frame. In this manner, time shift is given to the virtual frames assigned to the terminals, so that a delay permissible for each terminal is kept. Hereby, if temporary high traffic exceeding the transmission rate occurs, the transmission timing of each terminal is shifted to the later slot as much as possible, thereby making it possible to give virtual reservation, exceeding the practical terminal accommodation performance. Accordingly, it is possible to reduce the packet discarding rate, so that the number of terminals which can be accommodated can be increased.

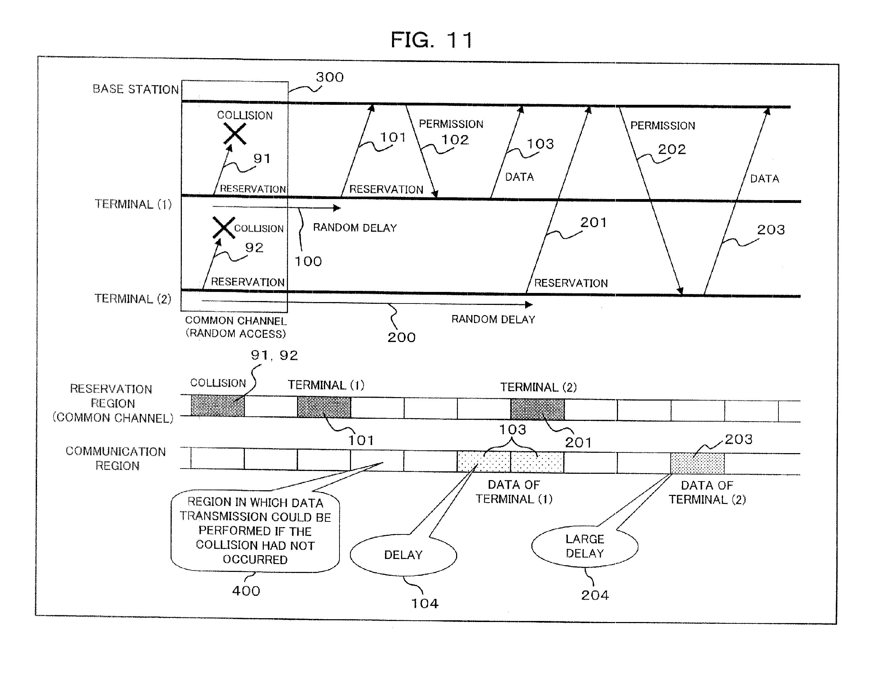

However, as it becomes an issue in the following patent document 1, when a common channel is used as a reservation region, collision of the reservation packets often occurs, so that data transmission efficacy is lowered.
A concrete example will be described with reference to FIG. 11. In FIG. 11, two terminals (1) and (2) generates uplink data at the same time. Since reservation requests (reservation packets) 91 and 92 for necessary radio resources (communication channels) are transmitted from two terminals (1) and (2), a collision occurs (see frame 300). Then, reservation packets from the two terminals (1) and (2) did not reach the base station (or not correctly decoded), each of the terminals (1) and (2) waits for a random time duration (random delay: see reference 100 and 200) and transmits reservation packets 101 and 102 once again. As a result, both of the terminals (1) and (2) can obtain data transmission permission 102, 202. The above random delay makes it possible for the two terminals (1) and (2) to transmit uplink data 103, 203, but a large delay occurs (see reference characters 104 and 204), and an empty region (see reference character 400) of the communication region which could be used if the collision had not occurred is generated. Such deterioration of transmission efficacy occurs. In this instance, retransmission technology after random delay is a general technique as described on page 374 of the following patent document

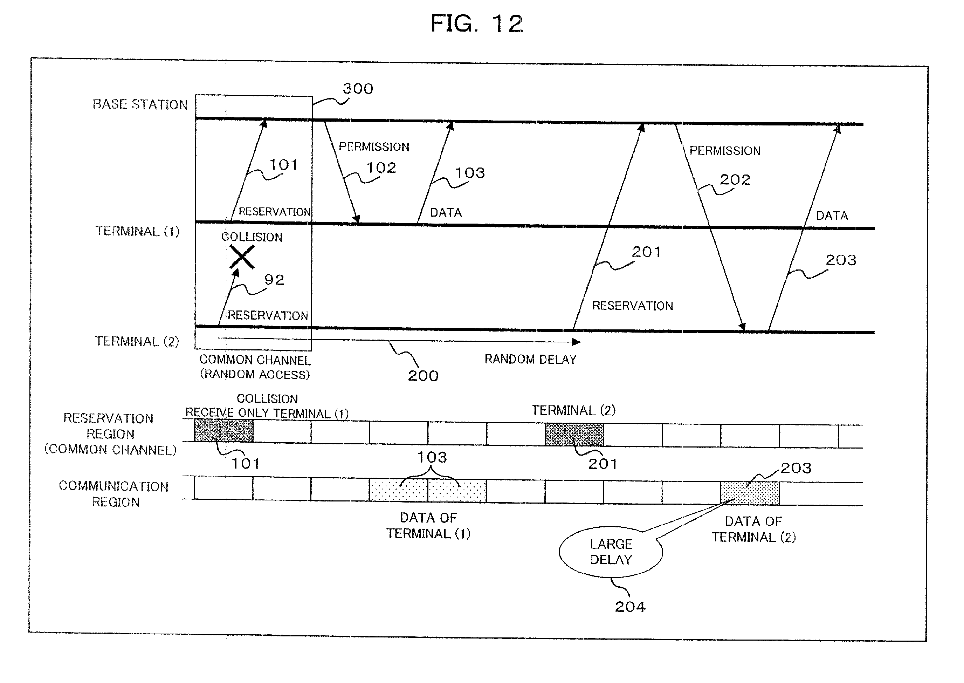

Further, referring to FIG. 12, a description will be made of another concrete example. In FIG. 12, the reservation packet 101 of the terminal (1) is correctly decoded at the base station. As a result, a transmission permission 102 is transmitted to the terminal (1) from the base station, and uplink data 103 is transmitted from the terminal (1). On the other hand, as to the terminal (2), since the reservation packet 92 does not reach the base station due to collision (or not correctly decoded), the terminal (2) retransmits a reservation packet after waiting for the random delay 200. Accordingly, a large delay occurs on the terminal (2) side (see reference 204).

With the technology proposed in the following patent documents 2 and 3, it is possible to reduce the occurrence of collision of reservation packets, but it is impossible to eliminate the collision. Hence, lowering of data transmission efficacy cannot be avoided.
The preset invention is proposed in view of the above issues, and an object of the present invention is to make it possible to prevent the occurrence of collision of reservation packets, thereby improving data transmission efficiency.
Patent Document 1: Japanese Patent Laid-open No. 2001 -217749
Patent Document 2: Japanese Patent Laid-open No. HEI 8-154097
Patent Document 3: Japanese Patent Laid-open No. 2000-224231
Patent Document 4: Japanese Patent Laid-open No. 20001-160983
Non-Patent Document 1: "Satellite Communication", written and edited by Shoji Iida, February 25, 1997, Ohmsha (ISBN4-274-03478-9)

### SUMMARY OF THE INVENTION

In order to accomplish the above object, according to the present invention, there is provided a radio communication system, comprising: a base station; and a plurality of terminals which perform reservation request for radio resources necessary for data transmission to the base station at random, wherein each of the plurality of terminals are allocated with individualized radio resources for reservation request necessary for the terminal to perform the reservation request to the base station.

As a preferred feature, the base station includes: radio resource managing means which manages radio resources for communication with the terminals; made-for-reservation-request radio resource allocating means which allocates, in response to a data transmission request from one of the terminals, individualized radio resources for a reservation request to the terminal; and made-for-data-transmission radio resource allocating means which allocates radio resources for the data transmission corresponding to the reservation request transmitted using the radio resources for reservation request. In addition, the terminal includes : data transmission request transmitting means which transmits the data transmission request to the base station; reservation request means which performs the reservation request using the individualized radio resources for the reservation request that is allocated from the base station to the data transmission request; and data transmission means which performs the data transmission to the base station using radio resources for the data transmission allocated by the base station in response to the reservation request.

As a generic feature of the present invention, there is provided a base station for use in a radio communication system in which a plurality of terminals which perform reservation request for radio resources necessary for data transmission to the base station at random, the base station comprising: radio resource managing means which manages radio resource for communication with the terminals; made-for-reservation-request radio resource allocating means which allocates, in response to a data transmission request from one of the terminals, individualized radio resources for a reservation request to the terminal; and made-for-data-transmission radio resource allocating means which allocates radio resources for the data transmission corresponding to the reservation request transmitted using the individualized radio resources for reservation request.

As a preferred feature, the radio resource managing means manages the individualized radio resources for the reservation request by the frequency division scheme, by the time division scheme, by the code division scheme, by the frequency and time division scheme, or by the frequency and codes division scheme.

As another generic feature, there is provided a terminal used in a radio communication system in which a plurality of terminals that perform reservation request for radio resources necessary for data transmission to a base station at random, the terminal comprising: data transmission request transmitting means which transmits the data transmission request to the base station; reservation request means which performs the reservation request using individualized radio resources for the reservation request allocated by the base station in response to the data transmission request; and data transmitting means which performs the data transmission to the base station using the individualized radio resources for the data transmission allocated by the base station in response to the reservation request.

As a preferred feature, the above terminal further comprises a transmission buffer for temporarily accumulating data to be transmitted, wherein the data transmission request transmitting means transmits the data transmission request to the base station with the fact that data is accumulated in the transmission buffer as a trigger.
As yet another preferred feature, the data transmission request transmitting means transmits the data transmission request to the base station with a predetermined time as a trigger, or the data transmission request transmitting means transmits the data transmission request to the base station with a predetermined time interval as a trigger.

As a further preferred feature, the above terminal further comprises: receiving means which receives data from the base station, wherein the data transmission request transmitting means transmits the data transmission request to the base station with reception of data to be responded to the base station by the receiving means as a trigger.
The above-described invention guarantees the following effects and benefits.

(1) Since no collision of reservation packets occurs, transmission delay does not occur.
(2) Since no collision of reservation packets occurs, communication region in which transmission is not available due to collision does not occur (emptiness when uplink data is absent exists).
(3) Since the base station can obtain reservation packets from multiple terminals at the same time, it is possible to use a communication region efficiently. For example, when reservation packets are sent from multiple terminal at the same time, it is possible for the base station to successively allocate each terminal to a communication region, so that resources of the communication region is fully (100%) used (emptiness in the communication region does not occur).

(4) Relating to the above item (3), at the time of communication region resource allocation, allocation with consideration paid to service contents for example, whether or not real time is necessary) is available. For example, when transmission delay should be minimized for a certain terminal, allocation is performed earlier than the other terminals, so that it is possible to realize desired transmission delay.

### BRIEF DESCRIPTION OF THE DRAWINGS

FIG. 1 is a block diagram showing a construction of an important part of a radio communication system according to one preferred embodiment of the present invention;
FIG. 2 is a diagram showing an example of terminal state managed by a terminal state manager of FIG. 1 and state transition;
FIG. 3 is a diagram showing an example of channel division (allocation of radio resources) used in uplink communication from the terminals to the base station of FIG. 1.
FIG. 4 is a sequence diagram for describing an operation (reservation region allocation) of the radio communication system of FIG. 1;
FIG. 5 is a diagram for describing an operation (reservation packet transmission using individual channels) of the radio communication system of FIG. 1;
FIG. 6 is a diagram showing another example of reservation region allocation in the radio communication system of FIG. 1;
FIG. is a diagram showing yet another example of reservation region allocation in the radio communication system of FIG. 1;
FIG. 8 is a diagram showing still another example of reservation region allocation in the radio communication system of FIG. 1;
FIG. 9 is a diagram showing an example of use of individual channels in the previous radio communication system;
FIG. 10 is a diagram showing an example of use of a common channel which is divided in the direction of time in the previous radio communication system;
FIG. 11 is a diagram for describing the reservation-type random access scheme in the previous radio communication system; and
FIG. 12 is a diagram for describing a reservation-type random access scheme in the previous radio communication system.

### BEST MODE FOR CARRYING OUT THE INVENTION

Embodiments of the present invention will now be described with reference to the relevant accompanying drawings.

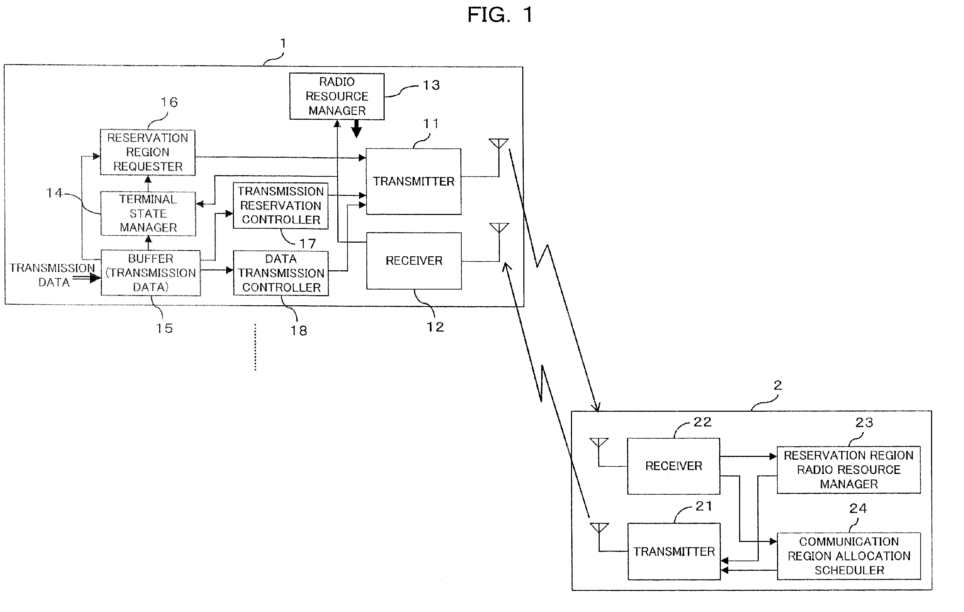

FIG. 1 is a block diagram showing an important part of a construction of a radio communication system according to one preferred embodiment of the present invention. In the drawing, the radio communication system of FIG. 1 includes multiple radio terminals 1 such as mobile phone terminals, etc., and a base station 2 to which such radio terminals 1 are accessible. Access (uplink) from the radio terminals 1 to the base station 2 is performed by the "reservation random access scheme". That is, multiple terminals 1 performs radio resource (communication channel) reservation requests necessary for data transmission to the base station 2 at random.

As shown in F1G. 1, an important part of the radio terminal 1 includes: a transmitter 11; a receiver 12; a radio resource manager 13; a terminal state manager 14; a buffer 15; a reservation region requester 16; a transmission reservation controller 17; and a data transmission controller 18. An important part of the base station 2 includes: a transmitter 21; a receiver 22; a reservation region radio resource manager 23; and a communication region allocating scheduler 24.

Here, in the terminal 1, the transmitter 11 transmits by radio an uplink packet (including picture image, sound data, a reservation packet and a control packet to the base station 2) by a required radio communication scheme such as TDMA (Time Division Multiple Access), and can perform necessary transmission processing including required coding processing, spreading processing, modulation processing such as QAM and QPSK, etc. The receiver 12 receives a downlink packet (picture image, sound data, and a control information packet such as reservation region (channel) and communication region (channel) allocation information transmitted by radio from the base station 2. The receiver 12 can perform necessary reception processing including required decoding processing, demodulation processing, dispreading processing.

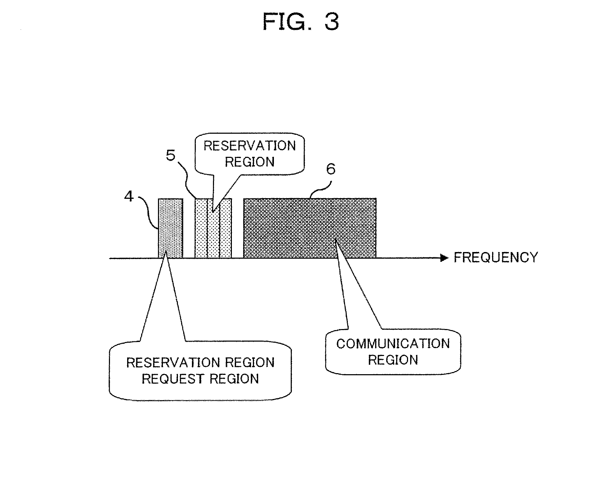

The radio resource manager 13 manages radio resources (channel) necessary for radio communication with the base station 2. The radio resource manager 13 holds channel information which is transmitted from the base station 2 and received by the receiver 12 and allocated (notified) with the control information packet, etc. In this instance, in the present embodiment, as detailed later with reference to FIG. 3, individualized (dedicated) radio resources (individual channel) to each terminal 1 are allocated as resources (reservation region: radio resource for reservation request) necessary for transmission of a packet (reservation packet) which requests reservation of communication region (communication channel) necessary for the terminal 1 to perform data transmission to the base station 2.

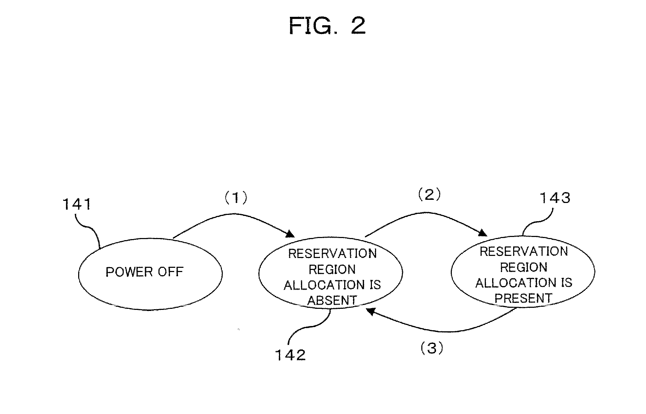

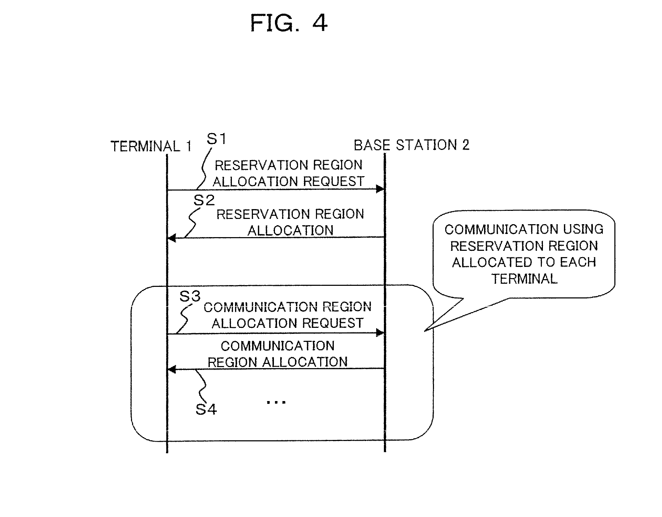

The terminal state manager 14 manages the state (terminal state) of the terminal. Here, as shown in FIG. 2, the terminal state manager 14 manages three states 141, 142, and 143, '"power OFF", "absence of reservation region allocation", and "presence of reservation region allocation". More specifically, when the terminal 1 changes from "power OFF" to "power ON", the "power OFF" state 141 transits to the "absence of reservation region allocation" state 142, as indicated by the transition shown by arrow (1). This state 142 is a state in which transmission from the reservation packet terminal is not available using an individual channel. Further, when data to be transmitted occurs in the terminal 1, as will be detailed with reference to FIG. 4, the terminal 1 requests allocation of a reservation region to the base station 2, and reservation region is specified by the base station 2. Then, the terminal 1 is made into the "presence of reservation region allocation" state 143 by transition indicated by arrow (2). Under the state 143, the terminal 1 can communicate with the base station 2 (communication region allocation request → communication region allocation → communication). In addition, after communication is completed, and allocation of individual channel from the base station 2 is released, the terminal 1 is made into the "absence of reservation region allocation" state 142 by the transition indicated by arrow (3).

The buffer 15 temporarily accumulates transmission data to be transmitted to the base station 2. The reservation region requester (data transmission request transmitting means) 16 transmits a reservation region allocation request (reservation region request) necessary for the above-mentioned reservation packet to the base station 2 as data transmission request. The transmission reservation controller (reservation request means) 17 performs control for transmitting a reservation packet (communication region allocation request) via the transmitter 11 using a reservation region allocated by the base station 2 in response to the above-mentioned reservation request.

The data transmission controller (data transmitting means) 18 sequentially reads out transmission data accumulated in the buffer 15 to make it into a packet, and transmits the packet to the base station 2 via the transmitter 11 using a communication region (communication channel) allocated by the base station 2 as a response to the above-mentioned reservation packet.
On the other hand, in the base station 2, the transmitter 21 transmits a downlink packet to the terminal 1 by radio. The transmitter 21 can perform necessary transmission processing including required coding processing, spreading processing, modulation processing or the like. The receiver 22 receives uplink packets transmitted from the terminal 1 by radio. The receiver 22 can perform necessary reception processing including required decoding processing, demodulation processing, despreading processing or the like.

The reservation region radio resource manager (radio resource managing means, made-for-reservation-request radio resource allocating means) 23 manages radio resources necessary for communication with the terminal 1, in particular, a reservation region (radio resources), and also allocates individualized reservation region (radio resources for reservation request) to a terminal 1 in response to a reservation region request from the terminal 1. As shown in FIG. 3, for example, the reservation region radio resource manager 23 manages reservation regions (channels) 5 to be allocated to different terminals 1 by frequency.

In this instance, FIG. 3 shows an example of channel division used in communication from the terminal 1 to the base station 2 (uplink). In this FIG. 3, different frequency reservation regions (individual channels) 5 are allocated to the three terminals 1. The reference character 4 indicates a request (reservation region request) region (channel common to each terminal) for use in performing request of the reservation region 5 to the base station 2. The reference character 6 indicates each communication region (communication channel) allocated (used in practical data communication) by the base station 2 in response to the reservation request. That is, this example has, three types of regions as uplink channel division by frequency; a reservation region request region 4; a reservation region 5; and a communication region 6. In other words, radio resources (channels) to be allocated in uplink are divided by frequency. Here, other division methods are available, and they are detailed later.

The communication region allocating scheduler (made-for-radio-resource allocation means) 24 performs allocation of uplink communication region 6 according to the predetermined scheduling method, corresponding to the reservation packet (communication region allocation request) which is transmitted from the terminal 1 using the reservation region 5 and received by the receiver 22, and notifies the terminal 1 of the allocation information (communication channel information) via the transmitter 21. The above-mentioned scheduling method will be described later.

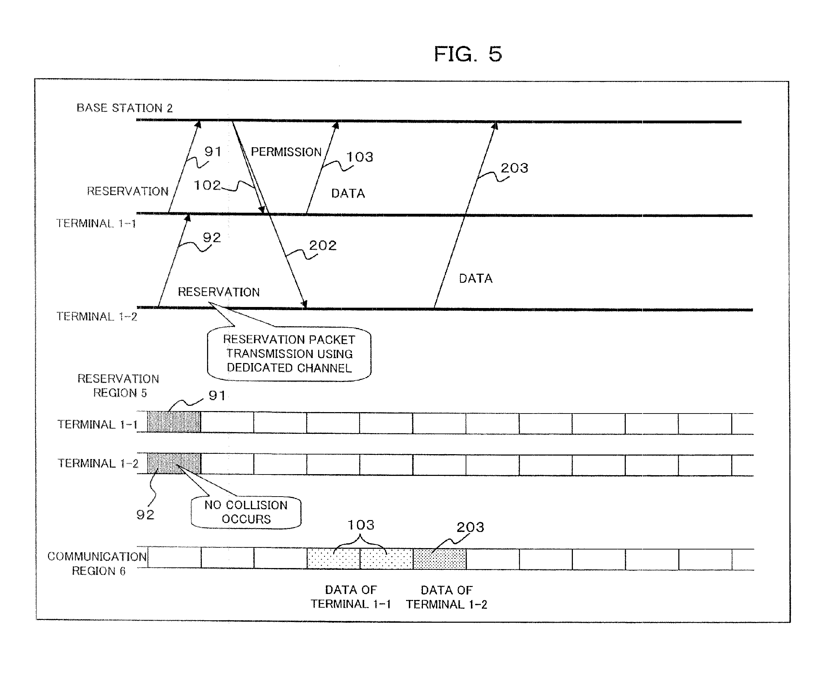

Hereinafter, referring to FIG. 4 and FIG. 5, a detailed description will be made of an operation of the radio communication system of the present embodiment having the above-described construction.
First of all, as shown in FIG. 4, in the terminal 1, when transmission data is accumulated in the buffer 15, the reservation region requester 16 transmits a reservation demand request to the base station 2 through the transmitter 11 (step S1). In this instance, since there are other triggers of occurrence of reservation region request, they will be described later.

In the base station 2, when the reservation demand request is received by the receiver 22, the reservation region radio resource manager 23 allocates individual radio resources as reservation region 5 to the terminal 1 which transmits the reservation demand request, and notifies (responses: step S2) the terminal 1 of the allocation information through the transmitter 21 as a "reservation region allocation" signal.
When this "reservation region allocation" signal is received by the receiver 12 of the terminal 1, it is input to the radio resource manager 13, whereupon the terminal 1 acknowledges radio resources (individual channel) to be used as reservation region 5 allocated by the base station 2. At that time, the terminal state manager 14 changes the terminal state into the "presence of reservation region allocation" state. Then, the transmission reservation controller 17 transmits a reservation packet (communication region allocation request) using the reservation region 5 allocated by the base station 2 as described above (step S3).

In the base station 2, which receives the reservation packet by the receiver 22, the communication region allocating scheduler 24 allocates a communication region 6 corresponding to the reservation packet, and the allocation information is responded to the terminal 1 through the transmitter 21 (step s4).
In the terminal 1, allocation information of the communication region 6 is notified to the radio resource manager 13. The terminal 1 reads transmission data from the buffer 15 by the data transmission controller 18 and generates a transmission frame, and performs data transmission to the base station 2 using the communication region 6 managed by the radio resource manager 13 (allocated by the base station 2).

In this manner, the terminal 1 allocates the radio resources (reservation region 5) necessary for performing reservation request of the necessary radio resources (communication region 6) for data transmission from the terminal 1 to the base station 2, that is, allocates individualized radio resources (individual channel) to the terminal 1 as radio resource (reserved region 5) for use in reservation packet transmission, thereby eliminating collision of reservation packets as in the present example. For example, as shown in FIG. 5, even if transmission data occurs in two terminals 1 (terminal 1-1, terminal 1-2) at the same time, and reservation packets 91 and 92 are transmitted at the same time, each reservation packet 91, 92 is transmitted to the base station 2 using individual channel 5, so that collision of the reservation packets 91 and 92 does not occur.

Accordingly, each terminal 1-1, 1-2 can receive permission (allocation of communication region 6) 102, 202 from the base station 2, and afterward, it is possible to perform transmission of data any time. As a result, transmission delay like in the previous art does not occur. In addition, a communication region 6 which cannot transmit due to the occurrence of collision does not appear. That is, it is possible to effectively use radio resources. Here, emptiness of the communication region 6 exists in the case of where no uplink packet exists.

Further, since the base station 2 can obtain reservation packets from multiple terminals 1 at the same time, it is possible to effectively use the communication region 6. For example, as shown in the lower most part of FIG. 5, the base station 2 can successively allocate data 103, 203 from multiple terminals 1 to the communication region 6, and thus, it is possible to make full (100%) use of radio resources of the communication region 6 (empty space does not occur in the communication region 6). In addition, relating to this, at the time of resource allocation to the communication region 6, it is possible to allocate resources in consideration of service contents of each terminal 1 (for example, whether or not real time is necessary). For example, if transmission delay needs to be decreased in a certain terminal 1, allocation is performed earlier than the other terminal 1, thereby keeping a desired transmission delay.

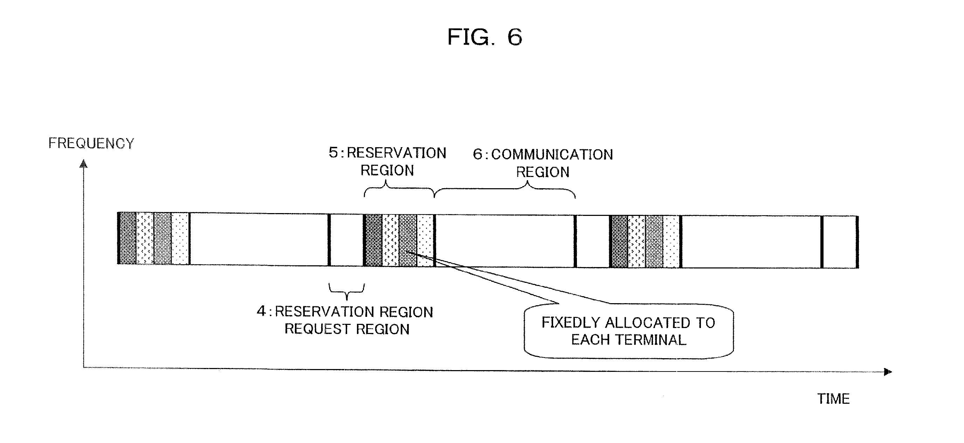

a) Other Examples of Radio Resource Allocation in Regions (Channels) 4, 5, and 6:
   (1) In the above example, as previously described with reference to FIG. 3, regions (radio resources) 4, 5, and 6 are divided by frequency. However, as shown in FIG. 6, for example, frequency may be uniform, and regions 4, 5, and 6 can be divisionally multiplexed in the time direction. Here, all the regions are not necessarily multiplexed into the same frequency band, and for example, reservation region 5 and reservation region 6 are multiplexed, and only the reservation request region 4 is allocated to a different frequency.

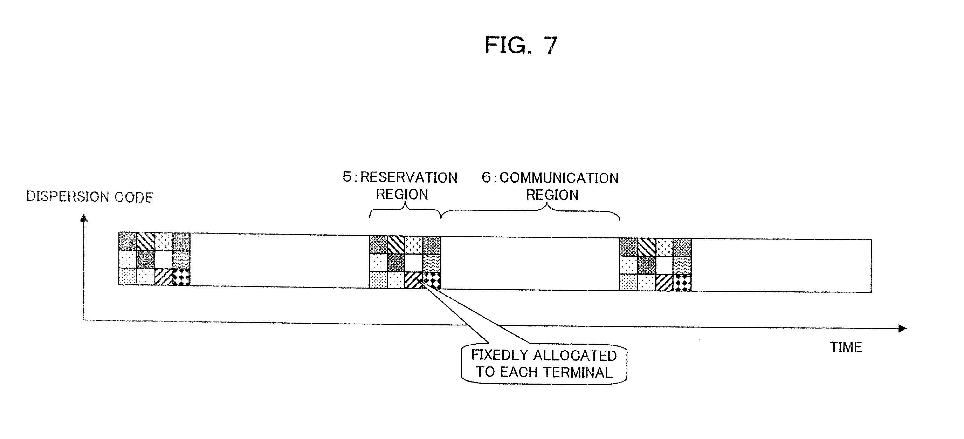

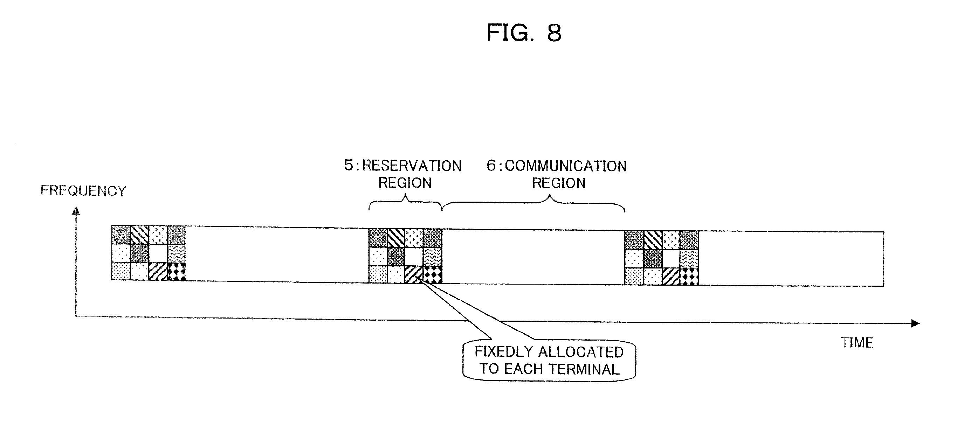

(2) Further, as shown in FIG. 7, the reservation region 5 and the communication region 6 are divisionally multiplexed in the time direction, and the reservation area 5 is divisionally multiplexed with spreading codes of the CDMA scheme (that is, two-dimensional divisionally multiplexing with time and spreading codes). Here, in the present example, reservation region request region 4 is allocated to a different frequency band.
(3) Furthermore, as shown in FIG. 8, reservation region 5 and communication region 6 are divisionally multiplexed in the time direction, and the reservation region 5 is divisionally multiplexed in the frequency direction (that is, two-dimensional divisional multiplexing with time and frequency). Here, in this example, also, the reservation request region 4 is allocated to a different frequency band.

in this instance, all the above methods are managed by the above-described reservation region radio resource manager 23.
b) Example of Trigger of Occurrence of Reservation Region Request:
   In this instance, a reservation region request of the terminal 1 can be generated when the above-mentioned data to be transmitted is accumulated in the buffer 15, and also, for example, the request can be generated at the predetermined time when transmission data is generated at fixed times, and also the request can be generated at the predetermined time intervals when transmission data is generated at fixed time intervals. In this case, a reservation region request can be transmitted at the time point when reception of all the data packets to be responded is not completed to reserve the reservation region 5 at an early stage.

c) Example of Communication Region Allocation Scheduling:
   Further, allocation (scheduling method) of the communication region 6 can be round robin in which each terminal is sequentially allocated, or scheduling with consideration paid to the priority of the terminals 1. For example, in the case of FIG. 5, the priority of the terminal 1-1 is higher than that of the terminal 1-2. Thus, although reservation packets 91 and 92 are generated at the same time, allocation of the terminal 1-1 higher in priority is performed earlier. In addition, scheduling in which the terminal 1 high in communication quality is allocated with high priority is also available. For example, for the purpose of improving total throughput in the service area of the base station 2, the terminal 1 with the best communication quality at the time of allocation is firstly allocated with the communication region 6.

In this instance, the present invention should by no means be limited to the above-illustrated embodiment, and various changes or modifications may be suggested without departing from the gist of the invention.

### INDUSTRIAL APPLICABILITY

As described above, according to the present invention, individualized radio resources for each terminal is allocated as radio resources for use in reservation request from the terminal. As a result, the occurrence of collision of reservation requests can be 25 prevented, so that transmission delay can be minimized, and uplink radio resources can be used efficiently. Hence, the present invention is considered to be significantly useful in the radio communication technology field.

## Claims

1. A radio communication system, comprising:
a base station; and
a plurality of terminals which perform reservation request for radio resources necessary for data transmission to said base station at random,
wherein each of the plurality of terminals are allocated with individualized radio resources for reservation request necessary for the terminal to perform the reservation request to the base station.

2. A radio communication system as set forth in claim 1,
wherein said base station includes:
radio resource managing means which manages radio resources for communication with the terminals;
made-for-reservation-request radio resource allocating means which allocates, in response to a data transmission request from one of the terminals, individualized radio resources for a reservation request to the terminal; and
made-for-data-transmission radio resource allocating means which allocates radio resources for the data transmission corresponding to the reservation request transmitted using the radio resources for reservation request, and
wherein said terminal includes:
data transmission request transmitting means which transmits the data transmission request to said base station;
reservation request means which performs the reservation request using the individualized radio resources for the reservation request that is allocated from said base station to said data transmission request; and
data transmission means which performs the data transmission to said base station using radio resources for the data transmission allocated by said base station in response to the reservation request.

3. A base station for use in a radio communication system in which a plurality of terminals which perform reservation request for radio resources necessary for data transmission to the base station at random, said base station comprising:
radio resource managing means which manages radio resource for communication with the terminals;
made-for-reservation-request radio resource allocating means which allocates, in response to a data transmission request from on of the terminals, individualized radio resources for a reservation request to the terminal; and
made-for-data-transmission radio resource allocating means which allocates radio resources for the data transmission corresponding to the reservation request transmitted using the individualized radio resources for reservation request.

4. A base station as set forth in claim 3, wherein said radio resource managing means manages the individualized radio resources for the reservation request by the frequency division scheme.

5. A base station as set forth in claim 3, wherein said radio resource managing means manages the individualized radio resources for the reservation request by the time division scheme.

6. A base station as set forth in claim 3, wherein said radio resource managing means manages the individualized radio resources for the reservation request by the code division scheme.

7. A base station as set forth in claim 3, wherein said radio resource managing means manages the individualized radio resources for the reservation request by frequency and time division scheme.

8. A base station as set forth in claim 3, wherein said radio resource managing means manages the individualized radio resources for the reservation request by frequency and code division scheme.

9. A terminal used in a radio communication system in which a plurality of terminals that perform reservation request for radio resources necessary for data transmission to a base station at random, said terminal comprising:
data transmission request transmitting means which transmits the data transmission request to the base station;
reservation request means which performs the reservation request using individualized radio resources for the reservation request allocated by the base station in response to the data transmission request; and
data transmitting means which performs the data transmission to the base station using the individualized radio resources for the data transmission allocated by the base station in response to the reservation request.

10. A terminal for use in the radio communication system of claim 9, further comprising a transmission buffer for temporarily accumulating data to be transmitted,
wherein said data transmission request transmitting means, transmits the data transmission request to the base station with the fact that data is accumulated in said transmission buffer as a trigger.

11. A terminal for use in the radio communication system of claim 9, wherein said data transmission request transmitting means transmits the data transmission request to the base station with a predetermined time as a trigger.

12. A terminal for use in the radio communication system of claim 9, wherein said data transmission request transmitting means transmits the data transmission request to the base station with a predetermined time interval as a trigger.

13. A terminal for use in the radio communication system of claim 9, further comprising: receiving means which receives data from the base station,
wherein said data transmission request transmitting means transmits the data transmission request to the base station with reception of data to be responded to the base station by the receiving means as a trigger.
